Europäisches Patentamt

European Patent Office

Office européen des brevets

(19)

(11) Publication number: **0 022 093**
**A1**

(12) # EUROPEAN PATENT APPLICATION

(21) Application number: **80830037.0**

(22) Date of filing: **19.06.80**

(51) Int. Cl.$^3$: **G 02 F 1/39**
**H 01 S 4/00, H 01 S 1/00**
**H 01 S 3/09**

(30) Priority: **29.06.79 IT 6837879**

(43) Date of publication of application:
**07.01.81 Bulletin 81/1**

(84) Designated Contracting States:
**DE FR GB NL**

(71) Applicant: **CENTRO RICERCHE FIAT S.p.A.**
**Strada Torino 50**
**I-10043 Orbassano, (Torino)(IT)**

(72) Inventor: **De Martini, Francesco**
**Viale F. Cecconi 34**
**I-00044 Frascati (Roma)(IT)**

(74) Representative: **Jacobacci, Filippo et al,**
**c/o Jacobacci-CASETTA & PERANI S.n.c. Via Alfieri, 17**
**I-10121 Torino(IT)**

(54) Method and apparatus for generating coherent electromagnetic radiation, particularly in the far ultraviolet and the X-ray region.

(57) A parametric generator of coherent electromagnetic radiation, particularly in the far ultraviolet and the X-ray region, comprises means (1) for accelerating bunches of electrons to a relativistic velocity, means (2) for modulating periodically the density of the electrons of each bunch of electrons in the spatial coordinate parallel to the velocity vector of the electrons, and generator means (3) for generating a spatially periodical distribution of electrostatic, or magnetostatic field or a coherent electromagnetic field which is made to interact with the density-modulated bunches of electrons thus generating a coherent electromagnetic radiation with an extremely short wavelength in what may be considered a relativistic Doppler effect.

FIG. 1

– 1 –

"Method and apparatus for generating coherent electromagnetic radiation, particularly in the far ultraviolet
and the X-ray region".

The present invention relates to a method and apparatus for
generating coherent electromagnetic radiation, particularly
in the far ultraviolet and X-ray region.

By the term of coherent electromagnetic radiation is meant
an electromagnetic field which can be described quantistic-
ally in terms of coherent states (Glauber states).

The following devices are used at present for generating
coherent electromagnetic radiation, in ascending order of
frequency of use, radiofrequency oscillators, microwave
oscillators, laser oscillataors and parametric convertors
for the infra-red, visible and near ultraviolet zones.

In laser oscillators and parametric convertors the generation of coherent electromagnetic radiation is derived from
the effect of atomic or molecular resonant states or corresponding elementary excitations in solids or in plasmas.
Beyond the limitations derived from considerations of a
thermodynamic character, such devices present an inherent limitation as regards the maximum frequency of the coherent electromagnetic radiation emitted, this limitation being tied to the nature of the phenomena itself and the principles on the basis of which they function. In practice the use of such resonant states has until now not allowed the generation of coherent electromagnetic radiation in the far ultraviolet and X-ray regions.

The most modern device of this type, the so-called "excimer laser", does not operate beyond the limits of frequency of the near ultraviolet.

Other methods for the generation of coherent electromagnetic radiation at extremely high frequency make use of frequency multipliers or frequency convertors using non-linear optical effects, resonant or non-resonant, excited by lasers in alkaline vapours or in non-linear crystal. By reason especially of the characteristics of transparency and optical dispersion of the materials, the latter devices do not allow the generation of coherent electromagnetic radiation in the frequency field of the far ultraviolet and X-rays.

Recently a new laser, the so called "free electron laser" (F.E.L.) has been developed (see J.M.J. Madey, Journal of Applied Physics, 42, 1906, 1977 and G. Brautti et al. "Microwave to X-ray up-conversion ..." in Optics Communications, Vol. 21, May 1977) which should be capable of generating a coherent radiation in the infrared, optical, ultraviolet and X-ray regions. U.S. Patent No. 3,822,410 to J.M.J. Madey discloses an apparatus comprising a F.E.L. laser, and which is capable of generating coherent ultraviolet and X-ray radiations. Such apparatus can operate at very high power levels, but it has the drawback that the gain of the apparatus decreases rapidly with the increase in frequency of the emitted radiation. The gain in the X-ray region becomes so small that a coherent X-ray radiation may hardly be obtained.

Further, as it has been already mentioned, the Madey apparatus comprises a F.E.L. laser having typically at least a couple of mirrors, which are necessary for the oscillation, especially for generating the highest frequencies, that is when the gain is particularly low. Appropriate mirrors must be highly reflective and, further, they must exhibit a predetermined transmittance coefficient, the value of which is very critical. But, at very short wavelengths, high reflective mirrors are extremely difficult and expensive to manufacture.

Another apparatus for producing coherent X-rays and even Gamma-rays, based on a quite different principle, is disclosed in U.S. Patent No. 3,813,535 to J.A. Viecelli. Such an apparatus comprises an accelerator for accelerating to a relativistic velocity the ion beam produced by a ion source, a laser source for directing an optical laser beam through the accelerated ion beam. The laser beam excites the electrons of the ions of the relativistic ion beam, thus inducing a laser action in the ions, and causing the emission of coherent X- or Gamma- radiation.

It should be noted that, since ions are by far heavier than subatomic particles, ions are extremely difficult to accelerate at the present time. No existing heavy ion accelerator is capable of approaching the energies required to produce a ion beam with a velocity which is very close to that of light. The ion velocities that can be obtained with existing machines are only a small fraction of the speed of light and the energy required by such machines, and consequently by the Viecelli apparatus, is enormous.

This invention has the object of providing a method and an apparatus for generating coherent electromagnetic radiation particularly, but not exclusively, in the far ultraviolet and X-ray regions, which overcome the aforesaid drawbacks of the known methods and apparatuses.

With a view to realizing the aforesaid object the present invention affords a method for generating a coherent electromagnetic radiation, characterized in that said method comprises the following steps:

a) accelerating electrically charged subatomic particles so as to obtain bunches of particles having a velocity of an absolute value close to the speed of light;

b) modulating periodically with a high harmonic content the density of the particles of each bunch according to a spatial coordinate parallel or approximately parallel to the velocity vector of the particles;

c) generating a periodic spatial distribution of an electrostatic, magnetostatic, or a coherent electromagnetic field;

d) causing coherent interaction between said fields and the bunches of subatomic particles modulated in density, so that the power of coherent electromagnetic radiation pulses thus generated is substantially proportional to the square of the number of subatomic particles included in each bunch, and belonging to the harmonic which is responsible for the conservation of the interaction moment, the wavelength $\lambda_s$ of the electromagnetic radiation generated being greatly reduced relative to the wavelength $\lambda_i$ of the incident fields, within the scope of what may be considered as a relativistic Doppler effect.

The present invention furthermore has as its object a parametric generator for coherent electromagnetic radiation particularly, but not exclusively, in the far ultraviolet and X-ray frequency regions, characterized in that it comprises:

  a) an accelerator of electrically charged subatomic particles which can supply bunches of particles having a speed of absolute value close to the speed of light;

  b) an undulator which can induce a periodic modulation (bunching) with a high harmonic content of the density of the particles comprised in each bunch according to a spatial coordinate parallel or approximately parallel to the speed vector of the particles;

  c) generating means adapted to generate a periodic spatial distribution of electrostatic or magnetostatic or a coherent electromagnetic field and to cause interaction of said fields with the bunches of subatomic particles modulated in density by said undulator.

The physical phenomenon at the basis of the method and apparatus according to this invention consists in a collision between a bunch of electrons (or other charged subatomic particles) in the relativistic regime, that is, having a speed $\vec{v}$ close to that of light c:

$$\left| \frac{\vec{v}}{c} \right| = \beta \lesssim 1$$

and an external electromagnetic field.

When examining the phenomenon in the reference system of the laboratory, the said collision takes place in such a way as to respect the Bragg "phase matching" condition, that is, the conservation of the interaction moment between the incident electromagnetic field, the bunch of relativistic particles and the emerging ("scattered") electromagnetic field. The collision takes place in such a way that the beam of incident radiation has a direction (wave vector $\vec{K}_i$) parallel to the vector $-\vec{v}$, or forming with the vector $-\vec{v}$ a small angle $\psi$ in the reference system of the laboratory. Similarly the beam of scattered electromagnetic radiation has a direction (wave vector $\vec{k}_s$) parallel to the speed vector $\vec{v}$ of the particles, or forming with said vector $\vec{v}$ a small angle $\psi$ .

The said collision causes by the relativistic Doppler effect a conversion in frequency between the frequency $\omega_i$ of the incident magnetic field and the frequency $\omega_s$ of

the scattered electromagnetic field. The phenomenon can therefore be interpreted as a reflection of electromagnetic radiation from a "mirror", or from a diffraction grating formed by the electron beam which moves at a relativistic speed $\underline{v}$.

In case the electromagnetic field of frequency $\omega_i$, incident against the electron beam is constituted by a laser radiation with a wavelength $\lambda_i = \dfrac{2\pi c}{\omega_i}$, and with an incidence angle $\varphi = 0$ and scattering angle $\psi = 0$, it can be shown that the frequency $\omega_s$ of the scattered electromagnetic field is multiplied by a factor $4\gamma^2$, where $\gamma = (1-\beta^2)^{-\frac{1}{2}}$, so that we have: $\omega_s = \omega_i \times 4\gamma^2$; $\lambda_s = \lambda_i / 4\gamma^2$, $\lambda_s$ being the wavelength of the scattered electromagnetic field.

The condition $\varphi = 0, \psi = 0$ corresponds to the highest frequency multiplication. In the case $\varphi \neq 0, \psi \neq 0$ we have:

$$\omega_s = \omega_i \cdot \frac{\left(1 + \beta \cos\varphi\right)}{\left(1 - \beta \cos\psi\right)}$$

The electron beam may, for example, be accelerated in a medium energy accelerating machine to an energy of 43 MeV. Such energy is equal to a factor $\gamma$ with a value equal to about 85. If furthermore the incident beam is supplied by a common $CO_2$ laser with a $\lambda_i = 10\ \mu m$, with $\varphi = \psi = 0$ the resulting scattered electromagnetic field would have a wavelength in the hard X-ray region:

$$\lambda_s \simeq 3{,}5\ \text{Å}$$

It must also be noted that accelerating machines for electrons can easily reach energies corresponding to $\gamma$ = 1000 or greater.

Regarding said collision the following may also be noted.

The scattering is of the Thomson type (elastic in the reference system of the particles). Where the wavelength $\lambda_i$ or $\lambda_s$ is comparable to the Compton wavelength $\lambda_c$ of the electron (or in general of the charged particles used) this type of scattering (anelastic in the reference system of the particles) must be considered ($\lambda_c$ = 2,4262.10$^{-12}$m for electrons).

The interaction takes place between effects which can be defined as "coherent" in the sense that:

a) the interacting field can be formed by a coherent electromagnetic radiation field, by a periodic spatial distribution of an electrostatic field, or by a periodic spatial distribution of a magnetostatic field;

b) each bunch of electrons (or, in general, of charged relativistic particles) must be prepared in such a way that the electron density $n_e$ in the direction parallel to the speed vector $\vec{v}$ (or in a direction which forms a little angle $\theta$ with the vector $\vec{v}$ in the reference system of the laboratory) is a periodic function, with a high harmonics content, of the corresponding spatial coordinate.

The electron beam must therefore undergo a "bunching" in a device which modulates the electron speed harmonically. Such speed modulation is transformed into density modulation after a suitable "drifting space" before the electron beam interacts in the collision which is at the basis of the effect of parametric frequency conversion. A modulation with a high harmonics content is required so as to ensure the "phase matching" of the interaction.

The device which effects the "bunching" of the electron bundle (undulator) can be formed by a suitable resonant cavity or by a waveguide arranged to be traversed by the beam of accelerated electrons and in which there exists an excitation state having a convenient distribution of standing and progressive electromagnetic waves similarly to what happens in a Klystron (see R.E. Collin, "Foundations of microwave engineering", Mc Graw-Hill) or in a travelling microwave tube (TWT).

The "bunching" may be obtained, alternatively, by effecting interaction between the primary electron beam with a laser (see M.A. Piestrup and al. Journal of Applied Physics, 46, 132, 1975).

The most suitable machine, however, to obtain a "bunching" with a high harmonics content for the purpose of parametric conversion of frequency is surely a free electron laser or amplifier, in which the primary electron beam is made to interact strongly with an electromagnetic field, in presence of a wiggler.

If the interacting field and the bunch of electrons (or of charged subatomic particles) have the characteristics of "coherence" as defined above, the scattered electromagnetic field also has the characteristic of coherence, according to the definition of Glauber (see Louisell, "Quantum statistical properties of radiation", Wiley, N.Y. 1973).

The most important effects of an interaction by collision of the type specified above are as follows:

1) the intensity of the "scattered" electric field, with a frequency of $\omega_s$, is proportional to the square of the electron density $n_e$: $I_s \propto n_e^2$, while in an incoherent interaction we would have $I_s \propto n_e$;

2) in the case of interaction of the electron beam with an incident electromagnetic field, the pulse duration of the said incident electromagnetic field $\tau_i$ is transformed into a pulse duration $\tau_s$ of the "scattered" electromagnetic field, according to the equation (valid for $\varphi = \psi = 0$):

$$\tau_s = \tau_i / 4\gamma^2.$$

This happens if the duration $\tau_i$ of the incident pulse, in the reference system of the laboratory, is by far lower than the duration of the electronic pulse in the same reference system.

The peak power of the scattered radiation may therefore be considerable, being proportional to $\gamma^2$, and the pulses emitted at a frequency $\omega_s$ may be extremely short; the availability of such short pulses allows the direct investigation of rapid phenomena of energy transfer in chemical processes and of relaxation in microscopic, atomic and molecular systems (time-resolution spectroscopy);

3) it can be demonstrated that the Bragg condition ("phase matching condition") in a similar interaction process by involving wavelengths in the domain of X-rays, corresponds to a very high collimation of the scattered radiation beam with a correspondingly high brightness; this is due also to the modalities of the optical diffraction process which, as is known, predicts a divergence of the beam proportional to the wavelength of the scattered radiation;

4) the scattered electromagnetic radiation is controllable in frequency; the frequency control can be obtained substantially in two ways;

- by varying the energy of the electron beam and therefore the value of the factor $\gamma$ which enters, as already stated, into the expression of $\omega_s$:

- by acting on the frequency of the incident field $\omega_i$ or by varying the width of the periodic spatial distribution of magnetostatic or electrostatic fields interacting with the relativistic subatomic particles.

Let us consider an electron beam accelerated in a linear machine, with an energy corresponding to a $\gamma$ value of about 500, and assuming that an electron bunch contains a total number of about $10^{12}$ electrons, through collision with a beam in the cavity of a HCOOH-far infrared laser operating with a wavelength $\lambda_i$ = 393 $\mu$m, with a power of 200 MW focussed into a cross-section with a diameter of 1 millimeter, one obtains a pulse of scattered electromagnetic radiation with a wavelength of $\lambda_s \cong 1,50$ Å, with a power of $P_s \approx 300$ Watt.

It will be noted that the most rapid phenomena of energy- and intramolecular- transfer take place in a time of about $10^{-13} \div 10^{-12}$ seconds, and can be therefore studied easily through the pulses obtained with abovesaid interaction. Lastly it is to be noted that, notwithstanding the small collision cross-section of the Thomson scattering, the coherence of the effect ensures a considerable emitted power.

This invention will now be described with reference to the enclosed drawings, furnished by way of non-limitative example, wherein:

Figure 1 is a block schematic diagram of a parametric generator apparatus for coherent electromagnetic radiation according to this invention; and

Figures 2 to 4 illustrate the operation of the parametric generator apparatus according to this invention respectively in a first, second and third form of embodiment.

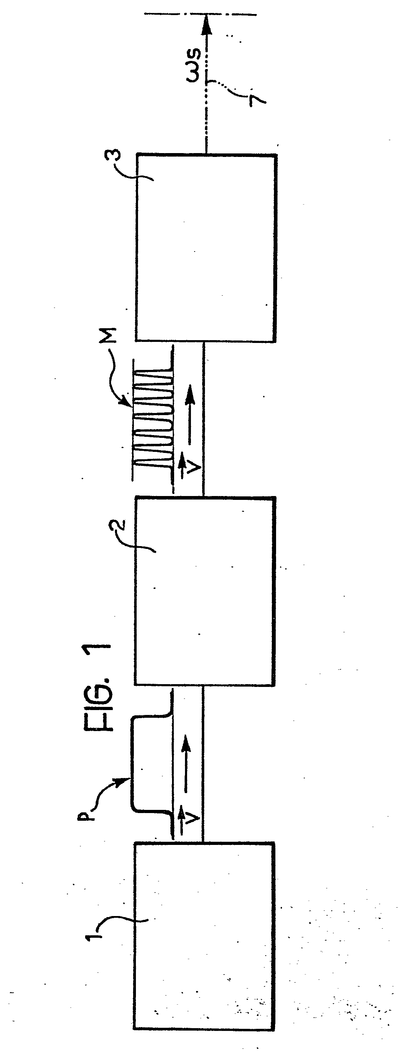

Reference numeral 1 in Figure 1 shows a high energy accelerator of electrically charged elementary particles. Conveniently said electrically charged elementary particles are constituted by electrons. The particle accelerator 1 can be formed by a microtron, by a LINAC accelerating machine, by a storage ring or by other accelerating machines of known type (see Chapter entitled "Particle accelerators" in "American Institute of Physics Handbook" -

Mc Graw-Hill, 1972).

The accelerator of electrically charged elementary particles is adapted to deliver output bunches of said particles having a velocity of $\vec{v}$ of absolute magnitude close to the speed of light c.

As previously mentioned, the accelerated particles are emitted by the accelerating machine in bunches, that is, the said particles are condensed into groups in such a way that the density of particles of each group or bunch is a function of the coordinate parallel to the velocity $\vec{v}$, of the type illustrated by the waveform indicated by P in Figure 1.

Reference numeral 2 indicates an undulator or bunches adapted to impose a periodic modulation (bunching) with a high harmonics content of the density of the particles comprised in each bunch according to a spatial coordinate parallel to the velocity vector $\vec{v}$ of the particles or forming an angle $\theta \ll 1$ with said vector). By the effect of such modulation the density function of the particles comprised in each bunch assumes the form exemplified by the waveform indicated by M.

The undulator 2 can be formed, for example, by a microwave resonant cavity traversed by the accelerated electron beam or by a waveguide in which there is excited a distribution of standing or progressive electromagnetic waves. Alternatively the modulation of the particle density of the beam can be effected through interaction of the electron beam with an external laser beam (see M.A.Piestrup et al., Journal of applied Physics, 46, 132, 1975). The maximum modulation efficiency with high harmonic content can be attained nowadays using as an undulator a free electron laser or amplifier in which the radiation beam which is to be amplified is injected in a direction which forms a little angle $\vartheta \ll 1$ with the velocity vector $\vec{v}$.

Reference numeral 3 indicates generator means adapted to generate a periodic spatial distribution of electrostatic fields or a coherent electromagnetic field, and to make said fields interact with the bunches of elementary particles modulated in density by said undulator 2.

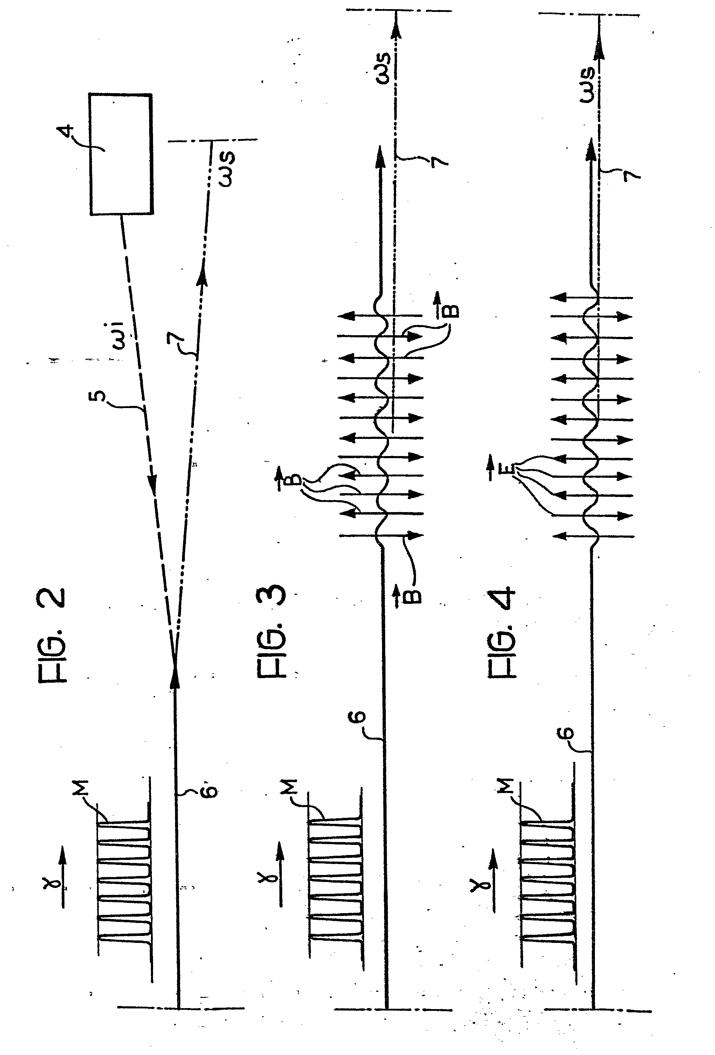

In a first form of embodiment the said generator means 3 can be formed by a laser (or a microwave generator), indicated by 4 in Figure 2, generating a beam 5 of coherent electromagnetic radiation with a frequency $\omega_i$ directed (approximately) "against" the electron beam indicated by 6. Reference numeral 7 shows the "scattered" coherent electromagnetic radiation beam ($\omega_s$), generated by the effect of the collision of the field 5 generated by the laser 4 with the bunches of particles (modulated and accelerated) forming the beam 6.

In a second form of embodiment, the electron bunches of modulated density coming from the undulator 2 are made to interact with a periodic spatial distribution of magnetostatic field as illustrated in Figure 3. Said periodic spatial distribution of magnetostatic field $\vec{B}$ can be generated, for example, by a periodic structure of permanent magnets or electromagnets which, when in use, is traversed by the beam of charged elementary particles coming from the undulator 2; said permanent magnets or electromagnets being disposed in such a way as to generate a spatially periodic magnetostatic field $\vec{B}$ along the direction of displacement of the particles, and transversely with respect to said direction. The effect of the interaction among the particles and said distribution of magnetostatic field $\vec{B}$ is that of effecting a modulation of the trajectory of said particles and generating a "scattered" coherent electromagnetic radiation with frequency $\omega_s$.

Alternatively, said periodic spatial distribution of magnetostatic field $\vec{B}$ can be generated by an electromagnet of helicoidal shape (wiggler) formed essentially by the winding of a pair of wires traversed by opposite currents, (see D.A.G. Deacon et al., Physical Review Letters 38, 892, 1977). Such a wiggler could be the wiggler comprised in a F.E.L. laser.

Contrary to what happens in the generation of coherent electromagnetic waves by means of laser oscillations, the free electron laser (F.E.L.), when used as parametric generator, does not present any functioning "threshold". In other words, such a device is able to function irrespective of the electronic density of the particle bunches or the intensity of interacting field.

In a third form of embodiment, the bunches of accelerated electrons from the accelerator 1 and modulated in density by the undulator 2 are made to interact with a periodic spatial distribution of electrostatic field indicated by

$\vec{E}$ in Figure 4. For this purpose there can be used, according to the known technique, a periodic structure formed by facing pairs of electrodes between which passes, during use, the beam of charged elementary particles coming from the undulator 2; said pairs of electrodes being disposed in such a way as to generate a spatially periodic electrostatic field $\vec{E}$ along the direction of propagation of the particles and transverse with respect to said direction. Similarly to the case of interaction between an electron beam and a magnetostatic field, the interaction with a distribution of electrostatic field has the effect of generating coherent electromagnetic radiation of frequency $\omega_s$.

This invention allows the generation, in a controllable way, of coherent electromagnetic radiations of very high frequency in the far ultraviolet and of X-ray regions. Consequently the invention allows the investigation of deep atomic and molecular layers, the study of biological and polymeric molecules through frequency resolution spectroscopy and time resolution spectroscopy. The latter is particularly suitable for studies relating to energy transfers (in chemistry, photochemistry and for the relaxation phenomena in solids, liquids and gases).

The invention furthermore allows investigations to be carried out on the lattice structure of crystals. Such investigations are of the greatest industrial interest substantially in the following fields:

- in metallurgy, physics and the technology of solids, in general to carry out a microscopic research on the structure of crystals, and in particular, of metals and metal alloys; it is therefore also possible to carry out detailed studies of lattice defects and microfracture defects and of thermally treated surfaces;

- in industrial chemistry to carry out research on the structure of polymers, on photosynthesis and photolysis in conditions of resonant optical pumping;

- in physical chemistry for the detailed study at microscopic level of catalytic processes, of the photochemical **processes** with metallic catalysts;

- in optoelectronics to carry out microscopic research and work on the semiconductors etc.

No less important are the applications envisaged for this invention in the medical field, particularly regarding:

- the direct study "in vivo" of biological processes such as cellular multiplication, the structure of the chromosomic bands, individuation of the genetic code, holography and direct photography of biological molecules (DNA, RNA);

- the study of the origin of degenerative cellular processes (tumors and genetic diseases);

- the cure of tumors and genetic diseases thanks to the possibility of concentrating very high obtainable energies into monochromatic coherent beams of high directionality.

Naturally while still keeping to the principle of this invention, the forms and methods of embodiment may be varied widely with respect to what has been described and illustrated only by way of non-limiting example, without departing from the scope of the present invention.

Claims:

1.  Method for generating a coherent electromagnetic radiation, characterised in·that it comprises the steps of:

a)  accelerating electrically charged subatomic particles so as to obtain bunches of particles having a velocity with an absolute value close to the speed of light;

b)  modulating periodically with a high harmonics content the density of the particles of each bunch according to a spatial coordinate parallel or approximately parallel to the velocity vector of the particles;

c)  generating a periodic spatial distribution of electrostatic fields, magnetostatic fields or a coherent electromagnetic field;

d)  causing coherent interaction between·said fields and the bunches of subatomic particles modulated in density, so that the power of the coherent electromagnetic radiation pulses thus generated is substantially proportional to the square of the number of subatomic particles comprised in each bunch and belonging to the harmonic which is responsible for the conservation of the interaction moment, the wavelength $\lambda_s$ of the resulting coherent electromagnetic radiation generated being greatly reduced with respect to the wavelength $\lambda_i$ of the incident fields in what can be considered as a relativistic Doppler effect.

2. Method for generating coherent electromagnetic radiation according to Claim 1, characterised in that said modulation in density is obtained through a modulation of the speed of the particles around the mean value of the speed of the particles comprised in each bunch.

3. Parametric generator of coherent electromagnetic radiation, characterised in that it comprises:

a) an accelerator (1) of electrically charged subatomic particles adapted to supply bunches of particles having a velocity with an absolute value close to the speed of light;

b) an undulator (2) which is adapted to induce a periodic modulation (bunching) with a high harmonics content of the density of the particles comprised in each bunch according to a spatial coordinate parallel or approximately parallel to the speed vector of the particles;

c) generator means (3) adapted to generate a periodic spatial distribution of magnetostatic, electrostatic or a coherent electromagnetic field and to make said field interact with the bunches of subatomic particles modulated in density by said undulator (2).

4. Parametric generator for coherent electromagnetic radiation according to Claim 2, characterised in that said generator means (3) are formed by a periodic structure of permanent magnets which, when in use, is traversed by the beam of charged subatomic particles coming from the undulator (2), said permanent magnets being disposed in such a way as to generate a periodic spatial magnetostatic field along the direction of displacement of the particles and transversely with respect to said direction.

5. Parametric generator for coherent electromagnetic radiation according to Claim 2, characterised in that said generator means (3) are formed by a periodic structure of electromagnets which, when in use, is traversed by the beam (6) of charged subatomic particles coming from the undulator (2); said electromagnets being placed in such a way as to generate a periodic spatial magnetostatic field along the direction of propagation of the particles and transversely with respect to said direction.

6. Parametric generator for coherent electromagnetic radiation according to Claim 2, characterised in that said generator means (3) are formed by an electromagnet of helicoidal form (wiggler).

7. Parametric generator for coherent electromagnetic radiation according to Claim 2, characterised in that said generator means (3) are formed by a periodic structure of facing pairs of electrodes between which, during use, passes the beam (6) of charged subatomic particles coming from the undulator (2); said pairs of electrodes being disposed in such a way as to generate a periodic spatial electrostatic field along the direction of propagation of the particles and transversely with respect to said direction.

8. Parametric generator for coherent electromagnetic radiation according to Claim 2, characterised in that said generator means (3) are formed by a coherent microwave generator.

9. Parametric generator for electromagnetic radiation according to Claim 2, characterised in that said generator means (3) are formed by a laser.

10. Parametric generator for coherent electromagnetic radiation according to Claim 2, characterised in that said accelerator (1) of charged subatomic particles is formed by a high energy accelerator.

11. Parametric generator for coherent electromagnetic radiation according to Claim 2, characterised in that the undulator (2) is formed by a resonant cavity in which, during use, a standing **electromagnetic** wave distribution is excited.

12. Parametric generator for coherent electromagnetic radiation according to Claim 2, characterised in that the undulator (2) is formed by a waveguide in which, during use, a progressive **electromagnetic** wave distribution is excited.

13. Parametric generator for coherent electromagnetic radiation according to Claim 2, characterised in that the undulator (2) is formed by a laser beam arranged to interact with the bunches of charged **subatomic** particles.

14. Parametric generator for coherent electromagnetic radiation according to Claim 2, characterised in that the undulator is formed by a free electron laser which effects the modulation with a high harmonics content of the density of the distribution of the charged particles which pass through it.

15. Parametric generator for electromagnetic radiation according to Claim 2, characterised in that it further comprises means to vary the frequency of the coherent electromagnetic radiation generated.

**FIG. 1**

FIG. 2

FIG. 3

FIG. 4

0022093

European Patent Office

**EUROPEAN SEARCH REPORT**

Application number

EP 80 83 0037

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| D | <u>US - A - 3 813 555</u> (VIECELLI)<br>* Figure 1, claims 1-4; column 4, lines 2-6 *<br><br>-- | 1,3,8-10,13,15 | G 02 F 1/39<br>H 01 S 4/00<br>H 01 S 1/00<br>H 01 S 3/09 |
| D | <u>US - A - 3 822 410</u> (MADEY)<br>* Figures 1-3; column 6, claims 1,2,4,7,17 *<br><br>-- | 1,3-5,7,10,14-15 | |
| D | OPTICS COMMUNICATIONS, vol. 21, no. 2, May 1977, Amsterdam, NL<br>G. BRAUTTI et al. "Microwave to x-ray up-conversion by undulated electron beams", pages 305-306.<br>* Page 305 *<br><br>-- | 1-2, 14-15 | **TECHNICAL FIELDS SEARCHED (Int.Cl. ³)**<br><br>G 02 F 1/39<br>H 01 S 4/00<br>1/00<br>3/09 |
| A | JOURNAL OF THE OPTICAL SOCIETY OF AMERICA, vol. 68, no. 5, May 1978, abstr. B3<br>New York, US<br>CHUN-CHING SHIH et al. "Theory of longitudinal relativistic free-electron laser",<br>page 628.<br>* Entirely *<br><br>-- | 1-2,4,12,14 | |
| A | JOURNAL OF THE OPTICAL SOCIETY OF AMERICA, vol. 68, no. 5, May 1978, abst. B4,<br>G.T. MOORE et al. "Echo effects in the free-electron laser".<br>pages 628,629.<br>* Lines 1-4 of the abstract *<br><br>-- | 6,14 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

The present search report has been drawn up for all claims

| Place of search | Date of completion of the search | Examiner |
|---|---|---|
| The Hague | 15-08-1980 | FARNESE |

EPO Form 1503.1 06.78

0022093

European Patent Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | US - A - 3 484 721 (BOND et al.)<br>* Column 1, lines 26-56 * | 1 | |
| A | PARTICLE ACCELERATORS, vol. 7, no. 1, 1975, London, GB P.L. CSONKA: "X- and $\gamma$-ray production by template modulated coherent light", pages 9-17.<br>* Page 9, column 1, line 21 to column 2, line 3 * | 11,12 | TECHNICAL FIELDS SEARCHED (Int. Cl. 3) |
| P | JOURNAL OF APPLIED PHYSICS, vol. 50, no. 7, July 1979, New York, USA T.I. SMITH et al. "Reducing the sensitivity of a free-electron laser to electron energy", pages 4580-4583.<br>* Entirely * | 1-5,8, 10-11, 14 | |
| P | OPTICS LETTERS, vol. 5, no. 2, February 1980, New York, US SHUN-CHING SHIH et al. "Two-element free-electron lasers", pages 76-78.<br>* Entirely * | 1-3,7, 8,11, 12 | |

EPO Form 1503.2   06.78